# EUROPÄISCHE PATENTSCHRIFT

(11) **EP 0 549 904 B1**
(45) Veröffentlichungstag und Bekanntmachung des Hinweises auf die Patenterteilung: **02.11.1994**
(21) Anmeldenummer: 92120428.5
(22) Anmeldetag: 30.11.1992
(51) Int. Cl.: B01D 53/34, B01D 53/36

(54) **Verfahren zur Regelung der Eingabemenge eines Behandlungsmediums zur Verminderung des Stickoxidgehaltes in den Abgasen von Verbrennungsprozessen**
Process for regulating the amount of treating agent for reducing the nitrogen oxide content of the exhaust gases from combustion processes
Procédé pour doser le moyen de traitement pour diminuer le taux d'oxyde d'azote dans des gas d'échappement de procédés de combustion

(30) Priorität: 03.12.1991 DE 4139862
(43) Veröffentlichungstag der Anmeldung: 07.07.1993
(73) Patentinhaber: MARTIN GmbH für Umwelt- und Energietechnik, D-80807 München (DE); TECHFORM ENGINEERING AG, CH-8105 Watt (CH)
(72) Erfinder: Martin, Walter Josef, Dipl.-Ing., W-8180 Tegernsee (DE); Martin, Johannes Josef Edmund, W-8124 Seeshaupt (DE); Hörler, Stefan, CH-7250 Klosters (CH); Nikolaus, Thomas, W-7753 Allensbach (DE)
(74) Vertreter: Zmyj, Erwin, Dipl.-Ing., Dipl.-Wirtsch.-Ing.

(56) Entgegenhaltungen:
- EP-A- 0 263 183
- PATENT ABSTRACTS OF JAPAN vol. 10, no. 63 (C-332)1985 & JP-A-60 020 716 (NIPPON KOKAN)

## Beschreibung

Die Erfindung bezieht sich auf ein Verfahren zur Regelung der Eingabemenge des Behandlungsmediums zur Verminderung des Stickoxidgehaltes in den Abgasen von Verbrennungsprozessen, bei dem die Eingabemenge in Abhängigkeit vom Stickoxidgehalt geregelt wird.

Bei der Behandlung von Abgasen aus Verbrennungsprozessen zur Minderung des Stickoxidgehaltes wird entweder Ammoniak vor einem Reduktionskatalysator dem Abgasstrom zugeführt (SCR-Prozeß) oder es wird Ammoniak bzw. ein Stoff, der unter Temperatureinwirkung Ammoniak oder Ammonium-Verbindungen bildet (z.B. Harnstoff, Hirschhornsalz oder ähnliche Stoffe), in den Abgasstrom im Temperaturbereich oberhalb 700°C eingedüst (SNCR-Prozeß). In beiden Fällen kann Ammoniak, das nicht bei der Reduktionsreaktion des Stickoxids verbraucht wurde, als sogenannter Ammoniakschlupf in den Abgasen ausgetragen werden. Dies führt sowohl zu einer Belastung der Atmosphäre als auch der nachgeschalteten Abgasreinigungseinrichtungen, wenn Ammoniak bzw. Ammoniak-Verbindungen (Ammoniumchlorid, Ammoniumsulfat, Ammoniumbisulfat) mit den Stäuben aus einer Filteranlage bzw. dem Abwasser aus einer Naßwäsche ausgeschleust werden.

Aufgabe der Erfindung ist es, ein Verfahren zur Regelung der Eingabemenge eines Behandlungsmediums, z.B. Ammoniak, zur Verminderung des Stickoxidgehaltes in Abgasen von Verbrennungsprozessen vorzuschlagen, durch welches nicht nur der Stickoxidgehalt, sondern auch der Gehalt an unverbrauchtem Behandlungsmedium möglichst niedrig gehalten werden können.

Diese Aufgabe wird ausgehend von einem Verfahren der eingangs erläuterten Art erfindungsgemäß dadurch gelöst, daß zusätzlich zu einem vorgegebenen Stickoxidgehalt-Sollwert ein Behandlungsmedium-Schlupfsollwert verwendet wird, der in Abhängigkeit von dem im Rauchgas gemessenen Stickoxidgehalt-Wert verändert wird. Durch die erfindungsgemäße Verknüpfung eines Stickoxidgehalt-Sollwertes und eines Behandlungsmedium-Schlupfsollwertes zur Regelung der Eingabemenge eines Behandlungsmediums, wird das angestrebte Ziel, nämlich die Verminderung des Stickoxidgehaltes unter gleichzeitiger Beachtung eines möglichst geringen Schlupfes an Behandlungsmedium, erreicht.

Eine verbesserte Regelgenauigkeit wird nach einer bevorzugten Ausgestaltung des Verfahrens dadurch erzielt, daß bei Veränderung des Behandlungsmedium-Schlupfsollwertes die Änderungsgeschwindigkeit des gemessenen Stickoxidgehalt-Wertes berücksichtigt wird.

Als Behandlungsmedium kann beispielsweise Ammoniak verwendet werden, wobei das bei der Stickoxid-Reduktion unverbrauchte Ammoniak als Ammoniak-Schlupf entweicht.

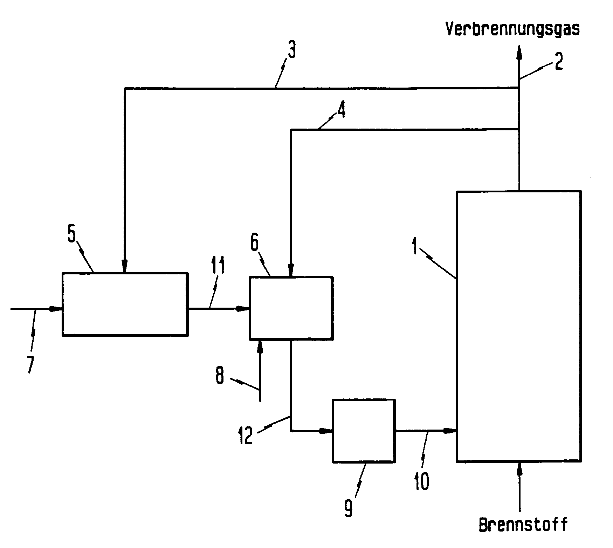

Die Erfindung wird nachstehend anhand eines in der Zeichnung beispielsweise dargestellten Schemas erläutert.

Wie aus der Zeichnung ersichtlich, wird zur Regelung der Eingabemenge eines Behandlungsmediums einer aus Feuerung und Kessel bestehenden Verbrennungsanlage 1 im Abgas 2 sowohl der Stickoxidgehalt 3 als auch der Behandlungsmediumschlupf (Ammoniak-Schlupf) 4 gemessen, wobei die Messung dieser Werte an einer Stelle vorgenommen wird, an der sich bereits behandeltes, d.h. mit Behandlungsmedium versetztes Abgas befindet. Der Wert des Stickoxidgehaltes 3 wird einem Regler 5 als Regelgröße und der Wert des Behandlungsschlupfes 4 wird einem Regler 6 als Regelgröße zugeführt. Der Regler 5 erhält den einzuhaltenden Stickoxidgehalt-Sollwert 7, während dem Regler 6 der einzuhaltende Behandlungsmediumschlupf-Sollwert 8 zugeführt wird. Dieser bei Betriebsbeginn vorgegebene Behandlungsmediumschlupf-Sollwert stellt eine Grundeinstellung dar, wobei diese Grundeinstellung dann während der Behandlung des Abgases wie nachfolgend beschrieben, verändert wird.

Wird nun dem Abgas mittels einer Fördereinrichtung 9 Behandlungsmedium 10 in Abhängigkeit von dem gemessenen Stickoxidgehalt 3 unter Berücksichtigung des vorgegebenen Stickoxidgehalt-Sollwertes 7 zugeführt und steigt beispielsweise aufgrund von Schwankungen im Verbrennungsprozeß der gemessene Schlupfwert 4 des Behandlungsmediums, so müßte nun dem Abgas weniger Behandlungsmedium zugeführt werden. Dies würde aber zu einem Ansteigen des Stickoxidgehaltes führen.

Würde man nun die Eingabemenge nur in Abhängigkeit vom Stickoxidgehalt regeln, so hätte man keine Kontrolle über den Schlupf des Behandlungsmediums.

Nach der Erfindung wird nun der Wert 3 des gemessenen Stickoxidgehaltes im Abgas dazu verwendet, um im Regler 5 eine Regelgröße 11 zu erzeugen, die im Regler 6 zu einer Veränderung des Behandlungsmedium-Schlupfsollwertes und damit zu einer Regelgröße 12 führt. Mittels dieser Regelgröße 12 beeinflußt der Regler 6 die Fördereinrichtung 9 für das Behandlungsmedium 10 und damit die Eingabemenge des dem Abgas zuzuführenden Behandlungsmediums.

Übersteigt also beispielsweise der Wert 3 des Stickoxidgehaltes den vorgegebenen Stickoxid-Sollwert 7 um einen gewissen Betrag, wobei in der Praxis der Wert 3 als Mittelwert über einen bestimmten Zeitraum, beispielsweise von einer Minute, herangezogen wird, dann wird der Behandlungsmediumschlupf-Sollwert 8 im Regler 6 durch die vom Regler 5 ausgehende Regelgröße 11 erhöht. Hierdurch wird erreicht, daß die Eingabemenge an Behandlungsmedium nicht in dem starken Maße erhöht wird, wie dies der Fall wäre, wenn die Eingabemenge ausschließlich in Abhängigkeit von dem festgestellten Wert 3 des Stickoxidgehaltes beeinflußt werden würde. Die Regelung der Eingabemenge ausschließlich durch den Wert 3 des Stickoxidgehaltes hätte nämlich ein zu starkes Ansteigen des Behandlungsmediumschlupfes 4 zur Folge, wodurch die Umwelt stärker belastet wäre. Durch die erfindungsgemäße Maßnahme wird die Tendenz zur Erhöhung der Eingabemenge bei steigendem Stickoxidgehalt gedämpft, wodurch ein gewisses Gleichgewicht zwischen dem Stickoxidgehalt und dem Behandlungsmediumschlupf eingehalten wird, um hierdurch ein, wenn auch kurzzeitiges, übermäßiges Ansteigen des Behandlungsmediumschlupfes auf Kosten einer exakten Einhaltung des Stickoxidgehaltes zu vermeiden.

## Patentansprüche

1. Verfahren zur Regelung der Eingabemenge eines Behandlungsmediums zur Verminderung des Stickoxidgehaltes in den Abgasen von Verbrennungsprozessen, bei dem die Eingabemenge in Abhängigkeit vom Stickoxidgehalt geregelt wird, dadurch gekennzeichnet, daß zusätzlich zu einem vorgegebenen Stickoxidgehalt-Sollwert (7) ein Behandlungsmedium-Schlupfsollwert (8) verwendet wird, der in Abhängigkeit von dem im Abgas (2) gemessenen Stickoxidgehalt-Wert (3) verändert wird.

2. Verfahren nach Anspruch 1, dadurch gekennzeichnet, daß bei Veränderung des Behandlungsmedium-Schlupfsollwertes (8) die Änderungsgeschwindigkeit des gemessenen Stickoxidgehalt-Wertes (3) berücksichtigt wird.

3. Verfahren nach Anspruch 1 oder 2, dadurch gekennzeichnet, daß als Behandlungsmedium Ammoniak verwendet wird, wobei das bei der Stickoxid-Reduktion unverbrauchte Ammoniak als Ammoniak-Schlupf entweicht.

## Claims

1. Process for regulating the amount of treating agent for reducing the nitrogen oxide content of the exhaust gases from combustion processes, in which the amount is regulated in accordance with the nitrogen oxide content, characterized in that a treating agent slip desired value (8) is used in addition to a predetermined nitrogen oxide content desired value (7) and is varied in accordance with the nitrogen oxide content value (3) measured in the exhaust gas (2).

2. Process according to claim 1, characterized in that the rate of change of the nitrogen oxide content value (3) measured is taken into account when varying the treating agent slip desired value (8).

3. Process according to claim 1 or claim 2, characterized in that ammonia is used as the treating agent, the ammonia not consumed in the nitrogen oxide reduction escaping as ammonia slip.

## Revendications

1. Procédé pour réguler la quantité de charge d'un milieu de traitement destiné à réduire la teneur en oxyde d'azote dans les effluents gazeux de processus de combustion, selon lequel la quantité de charge est régulée en fonction de la teneur en oxyde d'azote, caractérisé en ce que, en plus d'une valeur de consigne prescrite (7) pour la teneur en oxyde d'azote, il est utilisé une valeur de consigne (8) pour la dérive du milieu de traitement qui est modifiée en fonction de la valeur mesurée (3) de la teneur en oxyde d'azote dans les effluents gazeux (2).

2. Procédé selon la revendication 1, caractérisé en ce que, lors de la variation de la valeur de consigne (8) pour la dérive du milieu de traitement, il est tenu compte de la vitesse de variation de la valeur mesurée (3) de la teneur en oxyde d'azote.

3. Procédé selon l'une des revendications 1 ou 2, caractérisé en ce que de l'ammoniac est utilisé en tant milieu de traitement, l'ammoniac non consommé lors de la réduction d'oxyde d'azote s'échappant en tant que dérive d'ammoniac.
